(19) Europäisches Patentamt

European Patent Office

Office européen des brevets

(11) **EP 2 646 718 B1**

(12) **EUROPEAN PATENT SPECIFICATION**

(45) Date of publication and mention
of the grant of the patent:
**27.05.2015 Bulletin 2015/22**

(21) Application number: **12706118.2**

(22) Date of filing: **09.02.2012**

(51) Int Cl.:
***F16K 1/44*** *(2006.01)*          ***F16K 25/00*** *(2006.01)*
***F16J 15/06*** *(2006.01)*

(86) International application number:
**PCT/JP2012/000867**

(87) International publication number:
**WO 2013/118182 (15.08.2013 Gazette 2013/33)**

(54) **ANNULAR VALVE**

RINGVENTIL

SOUPAPE ANNULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.10.2013 Bulletin 2013/41**

(73) Proprietor: **MITSUBISHI HEAVY INDUSTRIES, Ltd.
TOKYO, Tokyo 108-8215 (JP)**

(72) Inventors:
• **RAMPEN, William
Lothian EH209TB (GB)**

• **STEIN, Uwe
Lothian EH209TB (GB)**

(74) Representative: **Hindle, Alistair Andrew
Alistair Hindle Associates Ltd.
66 Hanover Street
Edinburgh EH2 1EL (GB)**

(56) References cited:
AT-A4- 509 878          DE-A1- 10 353 011
DE-A1- 10 360 253          DE-A1-102006 006 883
DE-C- 810 827          US-A- 3 594 824

**Description**

**Technical Field**

The invention relates to the field of annular valves having a valve member or valve seat with inner and outer sealing ridges (which are usually circular).

**Background Art**

Known annular valves having inner and outer sealing ridges which differ only in their diameter can have poor operational lifetimes when used in applications where the valve is closed rapidly or subject to a high pressure differential when closed. We have found that when such valves are used in demanding applications, for example hydraulic pumps and motors having cycles of working chamber volume with a relatively high frequency of up to 3000 cycles per minute and working fluid having a pressure of 400 bar, the inner sealing ridge can fail rapidly.

Therefore, the technical problem addressed by the invention is to avoid failure of the inner sealing ridge of known annular valves, to increase the useful lifetime of the annular valves and to provide annular valves useful for demanding applications.

We have discovered that the inner sealing ridge of annular valves fails because the forces acting on the inner sealing ridge during operation are greater than the forces acting on the outer sealing ridge. When the annular valve is then used in an application where relatively high forces are exerted, for example in a hydraulic pump or motor, the inner sealing ridge therefore undergoes greater plastic deformation than the outer sealing ridge during a running-in period of the machine. This leads to torsional stress in the annular valve member and poor sealing by the inner seal. The inner seal then fails relatively quickly, for example as a result of wire drawing or cavitation erosion.

Documents DE 10 2006 006 883 A1, AT 509 878 A4, DE 103 53 011 A1 and DE 103 60 253 A1 disclose various types of annular lift valves with concentrical sealing ridges on the valve member or on the valve seat respectively.

**Summary of Invention**

According to a first aspect of the present invention there is provided an annular valve comprising an annular valve member and inner and outer valve seats, the annular valve member having a seat-facing surface which faces the annular valve seats, either the seat-facing surface of the annular valve member or the inner valve seat comprising an annular inner sealing ridge, either the seat-facing surface of the annular valve member or the outer valve seat comprising an annular outer sealing ridge, wherein the inner sealing ridge is more resistant to plastic deformation than the outer sealing ridge.

As the inner sealing ridge is more resistant to plastic deformation than the outer sealing ridge, then plastic deformation of the inner sealing ridge is less than would otherwise be the case, reducing damage to the sealing ridges (for example, from cavitation erosion) and so increasing the lifetime of the annular valve.

The inner sealing ridge is formed, at least in part, from a material which is harder than the material or materials from which the outer sealing ridge is formed.

Where the inner sealing ridge is formed from a harder material than the outer sealing ridge then, all else being equal, it will deform less (whether axially and/or radially) than the outer sealing ridge under the same stress. Therefore, the effects arising from greater forces being exerted on the inner sealing ridge than the outer sealing ridge will be reduced.

For example, the outer sealing ridge may be formed from the same material as the annular valve member (where the annular valve member comprises the outer sealing ridge) or the outer valve seat (where the outer valve seat comprise the outer sealing ridge) and the inner sealing ridge is formed of a harder material. Thus, the inner sealing ridge may be formed of a harder material than the annular valve member.

It may be that the outer sealing ridge is formed from a softer material than the annular valve member (where the annular valve member comprises the outer sealing ridge) or the outer valve seat (where the outer valve seat comprises the outer sealing ridge).

According to a second aspect of the present invention the inner sealing ridge is formed, at least in part, from a material which has a higher yield strength than the material or materials from which the outer sealing ridge is formed.

The material from which at least part of the inner sealing ridge is formed may, for example, have at least 1.5 times or at least double the yield strength of the material or materials from which the outer sealing ridge is formed.

According to a third aspect of the present invention the inner sealing ridge is thicker than the outer sealing ridge. By thickness we refer to the radial extent of a sealing ridge. Related terms, such as "thicker" should be construed accordingly. By the depth we refer to the axial extent of a sealing ridge.

Where the inner sealing ridge is thicker than the outer sealing ridge then, although a greater force may act on the inner sealing ridge, the force is distributed across the greater contact surface area of the inner sealing ridge, and so the ratio of the axial stress in the inner sealing ridge to the axial stress in the outer sealing ridge is less than the ratio of the axial force exerted by the valve seat on the inner sealing ridge to the axial force exerted by the valve seat on the outer sealing ridge.

Preferably the cross-sectional area of the inner sealing ridge, normal to the axis of the annular valve member, is greater than the cross-sectional area of the outer sealing ridge, normal to the axis of the annular valve member, at an equivalent axial position within the ridges.

The inner and outer ridges may each be circular, however this is not essential. Within this specification and the appended claims, by mean radius we refer to the mean of the radial distance between the axis and the inner or outer ridges, as appropriate. This equates to radius when the inner and outer ridges are circular.

By equivalent axial positions, we refer to positions which are in the same plane if the inner and outer sealing ridges are coplanar (which is typical) but with an axial offset corresponding to any axial offset between the inner and outer sealing ridges (e.g. if the inner and outer valve seats are axially offset).

If the inner and outer sealing ridges have the same thickness, normal to the axis of the annular valve member, the cross-sectional area of the inner sealing ridge will be less than the cross-sectional area of the outer sealing ridge by a ratio equal to the ratio of the circumference of the outer sealing ridge to the circumference of the inner sealing ridge. Thus, it is preferred for the inner sealing ridge to be at least sufficiently thick that the cross-sectional area of the inner sealing ridge, normal to the axis of the annular valve member, exceeds that of the outer sealing ridge, at an equivalent axial position within the ridges.

Typically, the shape of the inner sealing ridge and the outer sealing ridge are selected so that the axial extent of the inner and outer sealing ridges changes by substantially the same amount in use.

It may be that, for at least the majority of the axial extent of the inner and outer sealing ridges, the ratio of the cross-sectional area of the inner sealing ridge perpendicular to the axis of the annular valve member (Ai) to the cross-sectional area of the outer sealing ridge perpendicular to the axis of the annular valve member (Ao) is in the range:

$$\frac{Fi}{Fo} - 0.6(\frac{Fi}{Fo} - 1) \text{ to } \frac{Fi}{Fo} + 0.6(\frac{Fi}{Fo} - 1)$$

Where Fi is the force exerted on the inner sealing ridge by the inner valve seat (or inner valve member if the inner sealing ridge is formed on the inner valve seat) and Fo is the force exerted on the outer sealing ridge by the outer valve seat (or outer valve member if the outer sealing ridge is formed on the outer valve seat).

The ratio of the force exerted by the valve seat on the inner sealing ridge to the force exerted by the valve seat on the outer sealing ridge, due to a pressure differential across the annular valve member, is a function of the configuration of the annular valve seat and the annular valve member, and the Poisson ratio of the material, or materials, from which the annular valve member is formed. It can be obtained for a given annular valve by calculation, simulation or experiment.

It may be that Ai / Ao is in the range

$$\frac{Fi}{Fo} - 0.25(\frac{Fi}{Fo} - 1) \text{ to } \frac{Fi}{Fo} + 0.25(\frac{Fi}{Fo} - 1)$$

or in the range

$$\frac{Fi}{Fo} - 0.1(\frac{Fi}{Fo} - 1) \text{ to } \frac{Fi}{Fo} + 0.1(\frac{Fi}{Fo} - 1)$$

or in the range

$$\frac{Fi}{Fo} - 0.05(\frac{Fi}{Fo} - 1) \text{ to } \frac{Fi}{Fo} + 0.05(\frac{Fi}{Fo} - 1).$$

Preferably, for at least the majority of the axial extent of the inner and outer sealing ridges, Ai / Ao is substantially the same as Fi / Fo.

Nevertheless, as well as forces acting on the inner ridge and outer ridge due to static forces (the pressure differential across the annular valve member, and the biasing spring force), in some embodiments, the ratio of the forces acting on the inner ridge to the outer ridge will be increased by forces arising from the impact of the annular valve member on the valve seats. These forces depend on amongst other things the speed of impact of the annular valve member on the valve seats and the configuration of the annular valve member.

Although it would be possible to design an annular valve in which the forces arising from impact were greatest around the outer periphery of the annular valve, an annular valve member will typically be configured so that the forces arising from impact are greater around the inner periphery of the annular valve. Therefore, in a preferred embodiment, Ai / Ao is greater than Fi / Fo. It may be that Ai / Ao is greater than Fi / Fo x 1.1.

It may be that the annular valve member comprises a body and the sealing ridges extend from the body (or the respective valve seat where the valves seats comprises the sealing ridges), wherein said ratios apply at least in an intermediate region of the inner and outer sealing ridges, part way between the body of the annular valve member and the tip of the respective ridge. The relative thickness (and therefore the cross-section) of the inner and outer sealing ridges is less important at the tip of the respective ridges, as the tip is typically relatively narrow and so forms only a relatively small proportion of the bulk of the inner and outer sealing ridges, and at the base end of each sealing ridge where it extends from the body of the annular valve member, as this region is typically broad and so does not deform plastically to the same extent as the remainder of the sealing ridges.

It may be that the inner and outer sealing ridges have a triangular cross-section for at least the majority of their axial extent. The inner and outer sealing ridges may have a triangular cross-section in an intermediate region between the base and tip of each ridge. The surfaces of the triangular regions may extend at angles $theta_i$ and $theta_o$ relative to the axis of the annular valve in which case the ratio $\tan(theta_i)/\tan(theta_o)$ equals the ratio of the thickness of the inner sealing ridge to the thickness of the outer sealing ridge in the triangular regions and this ratio can be selected to be approximately equal to the ratio of the forces which will be applied to the inner and outer sealing ridges during operation.

Typically, the inner and outer sealing ridges taper as they extend axially from the seat-facing surface, wherein the annular valve member has an axis and the inner and outer sealing ridge taper at angles $theta_i$ and $theta_o$ relative to the axis, wherein

$$\frac{ri.\tan\ theta\,i}{ro.\tan\ theta\,o}$$

is in the range

$$\frac{Fi}{Fo} - 0.6(\frac{Fi}{Fo} - 1) \ \ \text{to} \ \ \frac{Fi}{Fo} + 0.6(\frac{Fi}{Fo} - 1)$$

It may be that

$$\frac{ri.\tan\ theta\,i}{ro.\tan\ theta\,o}$$

is in the range

$$\frac{Fi}{Fo} - 0.25(\frac{Fi}{Fo} - 1) \ \ \text{to} \ \ \frac{Fi}{Fo} + 0.25(\frac{Fi}{Fo} - 1)$$

or in the range

$$\frac{Fi}{Fo} - 0.1(\frac{Fi}{Fo} - 1) \ \ \text{to} \ \ \frac{Fi}{Fo} + 0.1(\frac{Fi}{Fo} - 1)$$

or in the range

$$\frac{Fi}{Fo} - 0.05(\frac{Fi}{Fo} - 1) \ \ \text{to} \ \ \frac{Fi}{Fo} + 0.05(\frac{Fi}{Fo} - 1)$$

Nevertheless, as forces arising from the impact of the annular valve on the annular valve seat typically lead to greater forces on the inner sealing ridge than the outer sealing ridge, it may be that

$$\frac{ri.\tan\ theta\,i}{ro.\tan\ theta\,o} > \frac{Fi}{Fo}$$

where ri is the mean radius of the inner sealing ridge and ro is the mean radius of the outer sealing ridge.

It may be that the inner and/or outer sealing ridges each have a triangular profile, an ogival profile or an ogee-shaped profile.

It may be that the thickness of the inner and outer sealing ridges is proportional throughout the axial extent of the inner and outer sealing ridges.

It may be that the tips of the inner and outer sealing ridges are in the same plane.

The material from which the inner and outer sealing ridges are formed (in particular the elasticity of the material) may be selected so that the tips of the inner and outer sealing ridges deform elastically by substantially the same amount during operation.

It may be that the annular valve has not been substantially run in. Thus, the properties described above may relate to a newly fabricated valve.

It may be that the annular valve has been run in. Thus, the properties described above may relate to a valve which has been run in.

Running in is the procedure by which a newly formed annular valve is operated and undergoes physical changes until it reaches a substantially constant state for ongoing operation, at which point it is referred to in this specification and the appended claims as 'run in'. The predominant physical change is plastic deformation of the inner and outer ridges. This is significant in the early stages of running in and then reaches a plateau level of plastic deformation. However there will be other types of wear, for example, removal of some material and its deposition in other places (for example, material might be removed from the ridges and deposited on the seats).

The inner and outer valve seats are typically formed from a harder material than the sealing ridges. In an example, the hardness of the seats, on the Rockwell C Scale is in the range of 45 to 60 and the hardness of the sealing ridges (formed as an integral unit from a homogenous material) are in the range of 23 to 32. Thus, at the end of the running in period the valve seats should typically be unmarked. The inner and outer valve seats may also be formed from a material harder than the annular valve member.

The inner and outer valve seats may be formed from steel. The inner and outer valve seats may be formed from a ceramic material.

The invention also extends in a fourth aspect to a hydraulic machine comprising at least one working chamber of cyclically varying volume, a fluid line and an annular valve according to the first, second or third aspect of the present invention regulating the flow of (working) fluid between the working chamber and the fluid line.

The annular valve may be electronically controlled. For example, the annular valve member may be coupled to an armature. A solenoid in electromagnetic communication with the armature may therefore be employed to actuate the annular valve.

The hydraulic machine may comprise a controller which actively controls the opening and/or closing of the annular valve (and optionally one or more other electronically controlled valve associated with the working chamber) to select the net displacement of working fluid by the electronically controlled valve on each cycle of working chamber volume. The operation of hydraulic machines of this type is known, for example from EP 0361927 and EP 0494236.

The hydraulic machine may be operable a working chamber volume cycle frequency of greater than 1000 cycles per minute or greater than 2000 cycles per minute. The hydraulic machine may be operable with working fluid having a pressure of greater than 100 bar, or greater than 200 bar.

According to a fifth aspect of the invention there is provided a hydraulic transmission comprising a hydraulic pump, a hydraulic motor, a high pressure fluid line extending from an output side of the hydraulic pump to an input side of the hydraulic motor and a low pressure fluid line extending from an output side of the hydraulic motor to an input side of the hydraulic pump, wherein the hydraulic pump and/or the hydraulic motor are a hydraulic machine according to the fourth aspect of the invention, wherein the hydraulic transmission comprises a controller which controls the hydraulic pump and the hydraulic motor and regulates the pressure in the high pressure fluid line thereby defining a maximum operating fluid pressure differential between the high pressure fluid line and the low pressure fluid line, wherein, for at least the majority of the axial extent of the inner and outer sealing ridges, the ratio of the cross-sectional area of the inner sealing ridge perpendicular to the axis of the annular valve seat to the cross-sectional area of the outer sealing ridge perpendicular to the axis of the annular valve seat is substantially the same as the ratio of the force exerted on the inner sealing ridge by the annular valve seat to the force exerted on the outer sealing ridge by the annular valve seat when the annular valve is closed under predetermined operating conditions.

The predetermined operating conditions may include a condition that the pressure differential across the annular valve member equals a predetermined pressure differential (which may be the maximum operating fluid pressure different or a mean or median operating fluid pressure differential). The maximum operating fluid pressure differential is typically approximately the same as the maximum pressure difference between the low pressure and high pressure fluid lines during operation at the maximum rated pressure in the high pressure fluid line.

The predetermined operating conditions may include a condition that the cycles of volume of the working chamber for which the annular valve regulates fluid flow have a predetermined frequency. The predetermined conditions may include a predetermined current through a solenoid which actuates the annular valve.

It may be that the shape of the inner sealing ridge and the outer sealing ridge are selected so that the axial extent of the inner and outer sealing ridges changes by substantially the same amount in use in operation of the hydraulic transmission under predetermined operating conditions (i.e. at a predetermined frequency of cycles of working chamber volume and predetermined fluid pressure differential).

Additionally there is provided a method of designing an annular valve according to the third aspect of the invention comprising selecting the shape of the inner and outer sealing ridges so that the axial extent of the inner and outer sealing ridges changes substantially constantly under predetermined working conditions.

According to a sixth aspect of the present invention, there is provided a method of running in an annular valve comprising the steps of providing a fluid working machine having a working chamber of cyclically varying volume, a low pressure fluid line, a high pressure fluid line, and an annular valve according to the first aspect of the invention located between the working chamber and either the low pressure fluid line or the high pressure fluid line to thereby regulate the flow of fluid between the working chamber and either the low pressure fluid line or the high pressure fluid line, and operating the fluid working machine with a predetermined frequency of cycles of working chamber volume and predetermined low and high pressure fluid line pressures, wherein the axial extent of the inner and outer sealing ridges deform by substantially the same amount. Preferably the method is continued until plastic deformation of the inner and outer sealing ridges plateaus.

Brief Description of Drawings

An example embodiment of the invention will now be described with reference to the following Figures in which:

[fig.1]Figure 1 is a section through key components of a prior art annular valve;
[fig.2]Figure 2 illustrates deformation which can occur when the annular valve of Figure 1 is employed;
[fig.3]Figure 3 shows the practical result of the deformation;
[fig.4]Figure 4 is a cross section through an annular valve according to the invention;
[fig.5]Figure 5 is a cross section through an alternative annular valve according to the invention;
[fig.6]Figure 6 is a cross section through an alternative annular valve according to the invention;
[fig.7A]Figures 7A illustrates an alternative cross-section through sealing ridges;
[fig.7B]Figures 7B illustrates an alternative cross-section through sealing ridges;
[fig.7C]Figures 7C illustrates an alternative cross-section through sealing ridges;
[fig.7D]Figures 7D illustrates an alternative cross-section through sealing ridges;
[fig.8]Figure 8 illustrates an alternative embodiment in which the inner and outer sealing ridges are formed from different materials;
[fig.9]Figure 9 illustrates an alternative embodiment in which the inner and outer sealing ridges are formed from different materials; and
[fig.10]Figure 10 is a schematic diagram showing forces Fi and Fo acting on the inner and outer sealing ridges respectively of the annular valve member arising from the pressure differential P.

**Description of Embodiments**

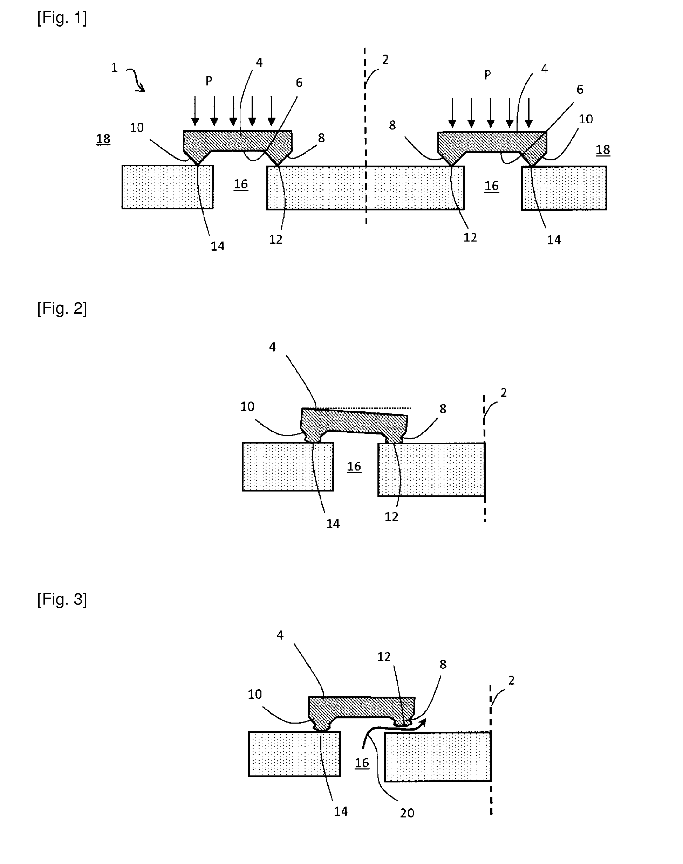

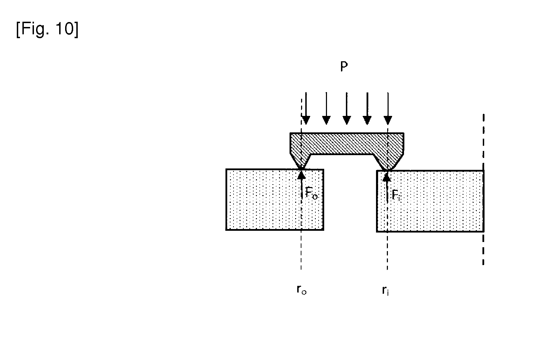

With reference to Figure 1, a known annular valve 1 is rotationally symmetric about an axis 2. The annular valve has a steel annular valve member 4 having a valve seat facing surface 6 from which inner and outer sealing ridges 8, 10 extend axially towards inner and outer valve seats 12, 14. The annular valve member is moveable axially relative to the valve seats to allow or to block the flow of working fluid (e.g. hydraulic fluid, typically oil) between a passage 16 and a gallery 18 extending around the annular valve member and in communication with a manifold (not shown) which may be a high pressure manifold for pressurised fluid (which may, for example, be in a pressure range of 5 -1000 bar) or a low pressure manifold which is typically in communication with a working fluid tank and at relatively low pressure (e.g. 1-3 bar). When the annular valve is closed, there will be a pressure differential across the annular valve, leading to a generally even pressure P, illustrated in Figure 10, across the valve member.

In practice, the force exerted on the inner ridge (Fi, shown in Figure 10) due to the pressure differential is greater than the force exerted on the outer ridge (Fo). Calculations of the relative forces are discussed below. We have found that, as illustrated in Figure 2, the inner sealing ridge deforms plastically by a greater amount than the outer sealing ridge under sufficiently demanding conditions. After sufficient use, the inner sealing ridge does not seal at the same time as the outer sealing ridge and pressurised fluid can flow past the inner by flow path 20, illustrated in Figure 3. This leads to cavitation erosion of the inner sealing ridge.

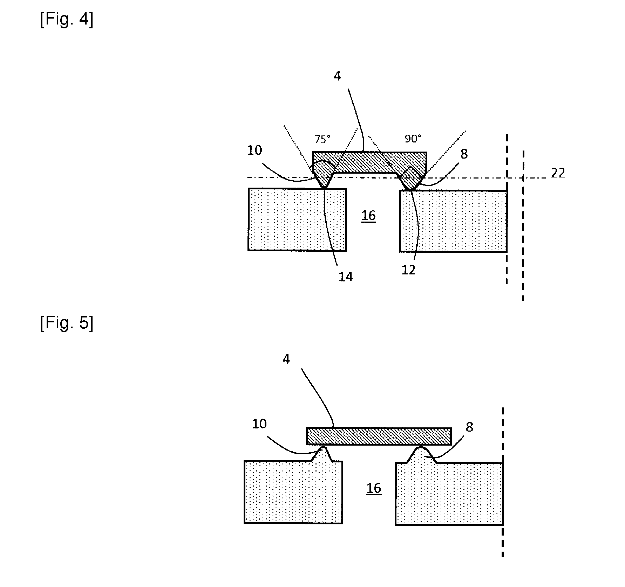

Figure 4 is a cross-section through an annular valve member according to the invention. The inner sealing ridge is thicker than the outer sealing ridge. It has a greater dimension in cross-section through a plane 22 which is orthogonal to the axis. As a result, although the force acting on the inner sealing ridge is greater than the outer sealing ridge, the resulting stress is balanced. Therefore, where the inner and outer sealing ridge are made from corresponding materials, they deform plastically to the same extent, and therefore maintain the same axial extent when the annular valve is first used (run in).

Figure 5 illustrates an alternative embodiment in which the annular valve member takes the form of a disc and the inner and outer sealing ridges are formed on the inner and outer valve seats, instead of the annular valve member. Again, the inner sealing ridge is thicker than the outer sealing ridge.

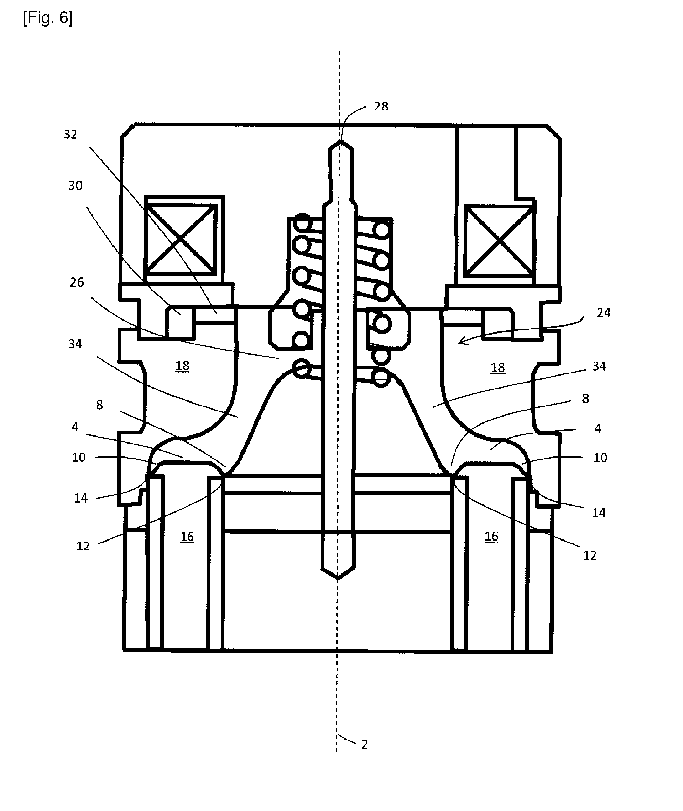

Figure 6 is a cross-section through a more detailed embodiment of a solenoid operated annular valve (functioning as an example of an electronically controlled annular valve). The annular valve has a moving portion 24 formed from a stem 26, which is guided by a guide member 28. The stem is integral with an armature 30 having a plurality of apertures 32 through which working fluid can flow to avoid unnecessary resistance to movement of the annular valve member. From the stem, a plurality of radially distributed arms 34 extend radially outwards and axially to support the annular valve member 4 which has inner and outer sealing ridges 8, 10. The inner sealing ridge is thicker than the outer sealing ridge in a plane orthogonal to the axis 2, as before. The inner and outer sealing ridges seat on inner and outer valve seats 12, 14 and the annular valve thereby dividing a gallery 18 which is in communication with a manifold from passages 16 which extend to a working chamber (e.g. a piston cylinder).

One skilled in the art can determine the correct relative thickness for the inner and outer sealing ridges taking into account the configuration of the annular valve member and annular valve seat either by calculation or by experiment.

In order to determine the correct relative thickness by experiment, annular valves formed with inner and outer sealing ridges having different relative thickness can be fabricated and run in using a fluid working machine having consistent operating conditions, e.g. a consistent frequency of cycles of working chamber volume and consistent pressures in the high and low pressure manifolds. It is most important during this process to regulate the pressure of the manifold which is in fluid communication with the annular valve, which may be either the low pressure manifold or the high pressure manifold depending on the intended purpose of the annular valve. These operating conditions should be consistent between experiments but may vary during experiments provided that they do so in a fashion which is generally consistent from one experiment to the next. The experiment should be run for each annular valve until changes in the shape of the inner and outer sealing ridges due to plastic deformation plateau. The inner and outer sealing ridges can then be inspected using mechanical or optical profile measuring techniques to determine which annular valve member has inner and outer sealing ridges of most consistent depth after the running in period.

In order to determine the correct relative thickness by calculation, it is necessary to take into account both static forces which will be exerted on the inner and outer valve seats during operation in particular conditions (e.g. with a specific pressure differential across the annular valve member, a particular frequency of cycles of working chamber volume, a particular impact speed of the annular valve member on the annular valve seats etc.) and also impact forces.

Static forces on the inner and outer sealing ridge arising from the pressure difference P acting on the annular valve members can be calculated by, for example, finite element modelling or from first principles, taking into account the configuration of the annular valve. Where the annular valve is, or resembles, a planar disc, a suitable formula is provided by Roark's Formulas for Stress and Strain (Young, W. C.; Roark, R. J. and Budynas, R. G., 7th edition, 2002, publisher McGraw-Hill), the contents of which are incorporated herein by virtue of this reference.

According to Roark's Formulas for flat circular plates of constant thickness, with inner and outer edges simply supported, pp. 457, 458, 464, Qa, Qb (unit shear force (i.e. force per unit of circumferential length) at the outer edge and inner edge respectively) can be calculated as follows, where the vertical deflection of the plate ($y_a$, $y_b$) = 0 and where radial and tangential bending moments ($M_{rb}$= 0 and $M_{ra}$ = 0) can be assumed to be zero:

$$\theta_b = \frac{qa^3}{D}\frac{C_3 L_{17}}{C_1 C_9}\frac{C_2 L_{11}}{C_3 C_2} \qquad Q_b = qa\frac{C_1 L_{17} - C_2 L_{12}}{C_1 C_9 - C_3 C_7}$$

$$\theta_a = \theta_b C_4 + Q_b\frac{a^2}{D}C_6\frac{qa^3}{D}L_{14} \qquad Q_a = Q_b\frac{b}{a} - \frac{q}{2a}\left(a^2 - r_a^2\right)$$

where

$$C1 = \frac{1+v}{2} \cdot \frac{b}{a} \cdot 1n\left(\frac{a}{b}\right) + \left(\frac{1-v}{4}\right) \cdot \left(\frac{a}{b} - \frac{b}{a}\right)$$

$$C3 = \frac{b}{4 \cdot a} \cdot \left(\left(\left(\frac{b}{a}\right)^2 + 1\right) \cdot 1n\left(\frac{a}{b}\right) + \left(\frac{b}{a}\right)^2 - 1\right)$$

$$C7 = \frac{1}{2} \cdot \left(1 - v^2\right) \cdot \left(\frac{a}{b} - \frac{b}{a}\right)$$

$$C9 = \frac{b}{a} \cdot \left(\frac{1+v}{2} \cdot 1n\left(\frac{a}{b}\right) + \frac{(1-v)}{4} \cdot \left(1 - \left(\frac{b}{a}\right)^2\right)\right)$$

$$L11 = \frac{1}{64} \cdot \left(1 + 4 \cdot \left(\frac{ro}{a}\right)^2 - 5 \cdot \left(\frac{ro}{a}\right)^4 - 4 \cdot \left(\frac{ro}{a}\right)^2 \cdot \left(2 + \left(\frac{ro}{a}\right)^2\right) \cdot 1n\left(\frac{a}{ro}\right)\right)$$

$$L17 = \frac{1}{4} \quad 1 \quad \frac{1}{4} \frac{v}{} \quad 1 \quad \frac{ro}{a}^4 \quad \frac{ro}{a}^2 \quad 1 + (1+v) \quad 1n \frac{a}{ro}$$

$$Qb = q \cdot a \cdot \left(\frac{C1 \cdot L17 - C7 \cdot L11}{C1 \cdot C9 - C3 \cdot C7}\right) \qquad Qinner = Qb \cdot b \cdot 2 \cdot \pi$$

Where $theta_a$, $theta_b$ are the externally applied changes in radial slope (in radians), v is Poisson's ratio and q is the applied load per unit area (arising from the pressure differential, P).

Assuming that:

The pressure P = 400 bar = q, the diameter of the inner sealing ridge = 21mm (so the radius, ri = 10.5mm), the diameter of the outer sealing ridge = 31mm (so the radius, ro = 15.5mm), the material has Poisson's ratio, v=.3

Gives:

C1 = 0.3113; C3 = 0.0046; C7 = 0.3634; C9 = 0.2356;
L11 = 38747 x $10^{-4}$; and
L17 = 0.0427

Therefore,

$Qb$=1.1362·$10^5$ *mPa* (orN/m)
$Qinner$ = 7495.9497N

$Lfactinner = \dfrac{Qinner}{b \cdot 2 \cdot \pi}$ ; Lfactinner = 1.1362·$10^5$ *mPa* (or N/m)

$At = (a^2 - b^2) \cdot \pi$ ; At = 408.407$mm^2$ ; A = a·At
Q = 16336.2818N

Qouter=Q-Qinner; Q$outer$=8840.3321 N  $Lfactouter = \dfrac{Qouter}{a \cdot 2 \cdot \pi}$

$$Lfactouter=90773.0677mPa \quad Loadratio = \frac{Lfactinner}{Lfactouter} =1.2517$$

Thus, for the parameters set out above, the predicted ratio of the force on the inner ridge (referred to herein and in the claims as Fi) to the force on the outer ridge (referred to herein and in the claims as Fo) is 1.2517 and, if this were the only relevant consideration, one would predict that the correct ratio of the thickness of the inner ridge to the thickness of the outer ridge is 1.2517.

In practice, forces also arise from the impact of the annular valve member on the valve seat. For an annular valve as shown in Figure 6 having a moving portion including a central stem and axially and radially extending arms supporting the inner edge of the annular valve member, it is apparent that on impact, forces sufficient to rapidly decelerate the mass of the entire moving portion (including the armature) will be transmitted through the inner sealing ridge. Thus, the mass of the moving portion is coupled rigidly to the inner sealing ridge. However, corresponding forces through the outer sealing ridge will be lower as the arms do not extend directly to the outer sealing ridge and there will be slight flexion within the arms and annular valve member and so the outer sealing ridge is less rigidly coupled to the moving portion. Such forces can be calculated by finite element modelling or measured in a test rig.

One skilled in the art would approach calculation of impact related forces by finite element modelling, using programs such as Ansys (available from Ansys, Inc. of Canonsburg, Pennsylvania, USA), CosmosWorks (available from H Feddersen, Rosenheim, Germany), or Adams (available from MSC.Software Corporation, Santa Ana, California, USA), in particular exploring the impact speed, fluid flow around the valve, different frequencies and elasticities, and the elastic coupling of masses to the inner and outer sealing ridges. In the embodiment shown in Figure 6 it would therefore be preferable for the ratio of the thickness of the inner ridge to the outer ridge to be greater than the ratio of force acting on the inner ridge to force acting on the outer ridge due to static forces (1.2517 in the example above). Thus, the preferred ratio of the thickness of inner ridge to the outer ridge might be 1.3 - 1.4.

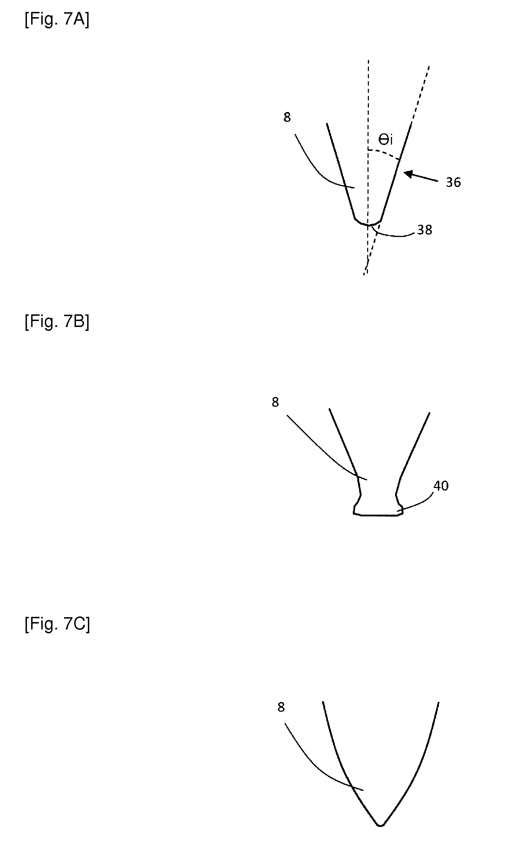

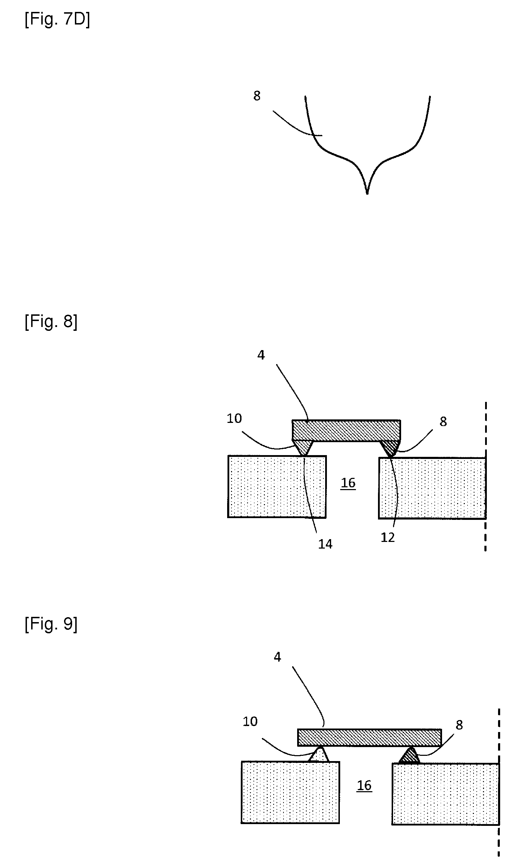

Figures 7A through 7D illustrate examples of possible shapes of the inner and outer sealing ridges. In the embodiment of Figure 7A, the inner sealing ridge is triangular in an intermediate region 36 but has a radiused tip 38. Although the sealing ridges may adopt such a conformation when they are first formed, after operation they may adopt the shape shown in Figure 7B where there is a thicker portion 40 at the tip, due to plastic deformation. Figures 7C and 7D show examples of sealing ridges having ogival and ogee-shaped cross-sections. In each case, the cross-section through the outer and inner sealing ridges would differ only in that the inner sealing ridge would be proportionately thicker throughout the axial extent of the inner and outer sealing ridges.

It is also possible to cause the inner sealing ridge to deform correspondingly with the outer sealing ridge whilst still having the same cross-section as the outer sealing ridge by making the inner sealing ridge from a harder material. With reference to Figure 8, the annular valve member and the inner sealing ridge are formed integrally from the same material (e.g. same grade of steel) and the outer sealing ridge is formed from a softer material (e.g. a softer grade of steel). Alternatively, the outer sealing ridge might be made from the same material as the annular valve member with the inner sealing ridge formed from a harder material than the annular valve member, or the inner and outer sealing ridges could both be formed from different materials to the annular valve member, provided that the inner sealing ridge is formed from a harder material than the outer sealing ridge. With reference to Figure 9, the same principle can be applied when the inner and outer sealing ridges are part of the valve seats. In this case, the inner sealing ridge may be formed from the same material as the valve seats and the outer sealing ridge may be formed from a softer material. The outer sealing ridge may be formed from the same material as the valve seats and the inner sealing ridge may be formed from a harder material. Both the inner and outer sealing ridges may be formed from different materials to the valve seats, where the inner sealing ridge is formed from a harder material to the outer sealing ridge. It may be that the inner sealing ridge and the inner valve seat are formed together from a first material and the outer sealing ridge and the outer valve seat are formed together from a second material, where the first material is harder than the second material.

Further variations and modifications may be made within the scope of the invention herein disclosed.

**Reference Signs List**

1 Annular valve
2 Axis
4 Annular valve member
6 Valve seat facing surface
8 Inner sealing ridge

10 Outer sealing ridge
12 Inner valve seat
14 Outer valve seat
16 Passage
18 Gallery
20 Flow path
22 Plane orthogonal to axis
24 Moving port
26 Stem
28 Guide member
30 Armature
32 Aperture
34 Arm
36 Intermediate region
38 Radiused tip
40 Thicker portion
P Pressure exerted on annular valve member
Fi Force acting on inner sealing ridge
Fo Force acting on outer sealing ridge

**Claims**

1. An annular valve (1) comprising an annular valve member (4) and inner and outer valve seats (12, 14), the annular valve member having a seat-facing surface (6) which faces the annular valve seats, either the seat-facing surface of the annular valve member or the inner valve seat comprising an annular inner sealing ridge (8), either the seat-facing surface of the annular valve member or the outer valve seat comprising an annular outer sealing ridge (10), wherein the inner sealing ridge is more resistant to plastic deformation than the outer sealing ridge, **characterized in that** the inner sealing ridge is formed, at least in part, from a material which is harder than the material or materials from which the outer sealing ridge is formed.

2. An annular valve (1) comprising an annular valve member (4) and inner and outer valve seats (12, 14), the annular valve member having a seat-facing surface (6) which faces the annular valve seats, either the seat-facing surface of the annular valve member or the inner valve seat comprising an annular inner sealing ridge (8), either the seat-facing surface of the annular valve member or the outer valve seat comprising an annular outer sealing ridge (10), wherein the inner sealing ridge is more resistant to plastic deformation than the outer sealing ridge, **characterized in that** the inner sealing ridge is formed, at least in part, from a material which has a higher yield strength than the material or materials from which the outer sealing ridge is formed.

3. An annular valve (1) comprising an annular valve member (4) and inner and outer valve seats (12, 14), the annular valve member having a seat-facing surface (6) which faces the annular valve seats, either the seat-facing surface of the annular valve member or the inner valve seat comprising an annular inner sealing ridge (8), either the seat-facing surface of the annular valve member or the outer valve seat comprising an annular outer sealing ridge (10), wherein the inner sealing ridge is more resistant to plastic deformation than the outer sealing ridge, **characterized in that** the inner sealing ridge is thicker than the outer sealing ridge.

4. An annular valve according to claim 3, wherein the cross-sectional area of the inner sealing ridge, normal to the axis of the annular valve member, is greater than the cross-sectional area of the outer sealing ridge, normal to the axis of the annular valve member, at an equivalent axial position within the ridges.

5. An annular valve according to claim 2, wherein, for at least the majority of the axial extent of the inner and outer sealing ridges, the ratio of the cross-sectional area of the inner sealing ridge perpendicular to the axis of the annular valve member (Ai) to the cross-sectional area of the outer sealing ridge perpendicular to the axis of the annular valve member (Ao) is in the range:

$$\frac{Fi}{Fo} - 0.6\left(\frac{Fi}{Fo} - 1\right) \text{ to } \frac{Fi}{Fo} + 0.6\left(\frac{Fi}{Fo} - 1\right)$$

where $Fi$ is the force exerted on the inner sealing ridge by the inner valve seat (or inner valve member if the inner sealing ridge is formed on the inner valve seat) and $Fo$ is the force exerted on the outer sealing ridge by the outer valve seat (or outer valve member if the outer sealing ridge is formed on the outer valve seat).

6. An annular valve according to claim 5, wherein for at least the majority of the axial extent of the inner and outer sealing ridges, $Ai / Ao$ is substantially the same as, or greater than, $Fi / Fo$.

7. An annular valve according to claim 2, wherein the inner and outer sealing ridges taper as they extend axially from the seat-facing surface, wherein the annular valve member has an axis and the inner and outer sealing ridge taper at angles thetai and thetao relative to the axis, wherein

$$\frac{ri.\tan\ theta\,i}{ro.\tan\ theta\,o}$$

is in the range

$$\frac{Fi}{Fo} - 0.6\left(\frac{Fi}{Fo} - 1\right) \text{ to } \frac{Fi}{Fo} + 0.6\left(\frac{Fi}{Fo} - 1\right)$$

, wherein $ri$ is the mean radius of the inner sealing ridge and $ro$ is the mean radius of the outer sealing ridge.

8. An annular valve according to claim 2, wherein

$$\frac{ri.\tan\ theta\,i}{ro.\tan\ theta\,o} > \frac{Fi}{Fo}$$

9. An annular valve according to any one of claims 1 to 3, wherein the inner and/or outer sealing ridges each have a triangular profile, an ogival profile or an ogee-shaped profile.

10. An annular valve according to claim 9, wherein the thickness of the inner and outer sealing ridges is proportional throughout the axial extent of the inner and outer sealing ridges.

11. An annular valve according to any one of claims 1 to 3, wherein the tips of the inner and outer sealing ridges are in the same plane.

12. An annular valve according to any one of claims 1 to 3, wherein the elasticity of the inner and outer sealing ridges are selected so that the tips of the inner and outer sealing ridges deform elastically by substantially the same amount during operation.

13. A hydraulic machine comprising at least one working chamber of cyclically varying volume, a fluid line and an annular valve according to any one of claims 1 to 3 regulating the flow of fluid between the working chamber and the fluid line.

14. A hydraulic transmission comprising a hydraulic pump, a hydraulic motor, a high pressure fluid line extending from an output side of the hydraulic pump to an input side of the hydraulic motor and a low pressure fluid line extending from an output side of the hydraulic motor to an input side of the hydraulic pump, wherein the hydraulic pump and/or the hydraulic motor are a hydraulic machine according to claim 13, wherein the hydraulic transmission comprises a controller which controls the hydraulic pump and the hydraulic motor and regulates the pressure in the high pressure fluid line thereby defining a maximum operating fluid pressure differential between the high pressure fluid line and the low pressure fluid line, wherein, for at least the majority of the axial extent of the inner and outer sealing ridges, the ratio of the cross-sectional area of the inner sealing ridge perpendicular to the axis of the annular valve seat to the cross-sectional area of the outer sealing ridge perpendicular to the axis of the annular valve seat is substantially the same as the ratio of the force exerted on the inner sealing ridge by the annular valve seat to the force exerted on the outer sealing ridge by the annular valve seat when the annular valve is closed under predetermined operating conditions.

15. A method of running in an annular valve comprising the steps of providing a fluid working machine having a working chamber of cyclically varying volume, a low pressure fluid line, a high pressure fluid line, and an annular valve according to any one of claims 1 to 3 located between the working chamber and either the low pressure fluid line or the high pressure fluid line to thereby regulate the flow of fluid between the working chamber and either the low pressure fluid line or the high pressure fluid line, and operating the fluid working machine with a predetermined frequency of cycles of working chamber volume and predetermined low and high pressure fluid line pressures, wherein the axial extent of the inner and outer sealing ridges deform by substantially the same amount.

**Patentansprüche**

1. Ringförmiges Ventil (1), das ein ringförmiges Ventilelement (4) und einen inneren und einen äußeren Ventilsitz (12, 14) umfasst, wobei das ringförmige Ventilelement eine sitzzugewandte Fläche (6) besitzt, die den ringförmigen Ventilsitzen zugewandt ist, wobei entweder die sitzzugewandte Fläche des ringförmigen Ventilelements oder der innere Ventilsitz eine ringförmige innere Dichtungsrille (8) umfasst, wobei entweder die sitzzugewandte Fläche des ringförmigen Ventilelements oder der äußere Ventilsitz eine ringförmige äußere Dichtungsrille (10) umfasst, wobei die innere Dichtungsrille beständiger gegen plastische Verformung als die äußere Dichtungsrille ist, **dadurch gekennzeichnet, dass** die innere Dichtungsrille zumindest teilweise aus einem Material gebildet ist, das härter als das Material oder die Materialien ist, aus denen die äußere Dichtungsrille gebildet ist.

2. Ringförmiges Ventil (1), das ein ringförmiges Ventilelement (4) und einen inneren und einen äußeren Ventilsitz (12, 14) umfasst, wobei das ringförmige Ventilelement eine sitzzugewandte Fläche (6) besitzt, die den ringförmigen Ventilsitzen zugewandt ist, wobei entweder die sitzzugewandte Fläche des ringförmigen Ventilelements oder der innere Ventilsitz eine ringförmige innere Dichtungsrille (8) umfasst, wobei entweder die sitzzugewandte Fläche des ringförmigen Ventilelements oder der äußere Ventilsitz eine ringförmige äußere Dichtungsrille (10) umfasst, wobei die innere Dichtungsrille beständiger gegen plastische Verformung als die äußere Dichtungsrille ist, **dadurch gekennzeichnet, dass** die innere Dichtungsrille zumindest teilweise aus einem Material gebildet ist, das eine höhere Fließgrenze als das Material oder die Materialien, aus denen die äußere Dichtungsrille gebildet ist, aufweist.

3. Ringförmiges Ventil (1), das ein ringförmiges Ventilelement (4) und einen inneren und einen äußeren Ventilsitz (12, 14) umfasst, wobei das ringförmige Ventilelement eine sitzzugewandte Fläche (6) besitzt, die den ringförmigen Ventilsitzen zugewandt ist, wobei entweder die sitzzugewandte Fläche des ringförmigen Ventilelements oder der innere Ventilsitz eine ringförmige innere Dichtungsrille (8) umfasst, wobei entweder die sitzzugewandte Fläche des ringförmigen Ventilelements oder der äußere Ventilsitz eine ringförmige äußere Dichtungsrille (10) umfasst, wobei die innere Dichtungsrille beständiger gegen plastische Verformung als die äußere Dichtungsrille ist, **dadurch gekennzeichnet, dass** die innere Dichtungsrille dicker als die äußere Dichtungsrille ist.

4. Ringförmiges Ventil nach Anspruch 3, wobei die Querschnittsfläche der inneren Dichtungsrille senkrecht zu der Achse des ringförmigen Ventilelements bei einer äquivalenten axialen Position innerhalb der Dichtungsrillen größer als die Querschnittsfläche der äußeren Dichtungsrille senkrecht zu der Achse des ringförmigen Ventilelements ist.

5. Ringförmiges Ventil nach Anspruch 2, wobei das Verhältnis des Querschnittsfläche der inneren Dichtungsrille senkrecht zu der Achse des ringförmigen Ventilelements (Ai) zu der Querschnittsfläche der äußeren Dichtungsrille senkrecht zu der Achse des ringförmigen Ventilelements (AO) zumindest für den Großteil der axialen Ausdehnung der inneren und der äußeren Dichtungsrille in dem Bereich:

$$\frac{Fi}{Fo} - 0{,}6\left(\frac{Fi}{Fo} - 1\right) \ \texttt{bis} \ \frac{Fi}{Fo} + 0{,}6\left(\frac{Fi}{Fo} - 1\right),$$

liegt, wobei Fi die durch den inneren Ventilsitz (oder das innere Ventilelement, wenn die innere Dichtungsrille auf dem inneren Ventilsitz gebildet ist,) auf die innere Dichtungsrille ausgeübte Kraft ist und Fo die durch den äußeren Ventilsitz (oder das äußere Ventilelement, wenn die äußere Dichtungsrille auf dem äußeren Ventilsitz gebildet ist,) auf die äußere Dichtungsrille ausgeübte Kraft ist.

6. Ringförmiges Ventil nach Anspruch 5, wobei Ai/Ao zumindest für den Großteil der axialen Ausdehnung der inneren und der äußeren Dichtungsrille im Wesentlichen dasselbe wie Fi/Fo oder größer ist.

7. Ringförmiges Ventil nach Anspruch 2, wobei die innere und äußere Dichtungsrille spitz zulaufen, während sie sich axial von der sitzzugewandten Fläche erstrecken, wobei das ringförmige Ventilelement eine Achse und eine Neigung der inneren und der äußeren Dichtungsrille bei Winkeln $theta_i$ und $theta_o$ in Bezug auf die Achse besitzt, wobei

$$\frac{ri.\tan theta\,i}{ro.\tan theta\,o}$$

in dem Bereich

$$\frac{Fi}{Fo} - 0{,}6\left(\frac{Fi}{Fo} - 1\right) \ \texttt{bis} \ \frac{Fi}{Fo} + 0{,}6\left(\frac{Fi}{Fo} - 1\right)$$

liegt, wobei ri der mittlere Radius der inneren Dichtungsrille ist und rO der mittlere Radius der äußeren Dichtungsrille ist.

8. Ringförmiges Ventil nach Anspruch 2, wobei

$$\frac{ri.\tan thetai}{ro.\tan thetao} > \frac{Fi}{Fo}$$

9. Ringförmiges Ventil nach einem der Ansprüche 1 bis 3, wobei die innere und/oder die äußere Dichtungsrille jeweils ein dreieckiges Profil, ein spitzbogenförmiges Profil oder ein S-kurvenförmiges Profil besitzen.

10. Ringförmiges Ventil nach Anspruch 9, wobei die Dicke der inneren und der äußeren Dichtungsrille durch die axiale Ausdehnung der inneren und der äußeren Dichtungsrille hindurch proportional ist.

11. Ringförmiges Ventil nach einem der Ansprüche 1 bis 3, wobei die Spitzen der inneren und der äußeren Dichtungsrille in derselben Ebene liegen.

12. Ringförmiges Ventil nach einem der Ansprüche 1 bis 3, wobei die Elastizität der inneren und der äußeren Dichtungsrille so gewählt ist, dass sich die Spitzen der inneren und der äußeren Dichtungsrille während des Betriebs im Wesentlichen um denselben Betrag elastisch verformen.

13. Hydraulische Maschine, die zumindest eine Arbeitskammer eines zyklisch variierenden Volumens, eine Fluidleitung und ein ringförmiges Ventil nach einem der Ansprüche 1 bis 3, das den Fluiddurchfluss zwischen der Arbeitskammer und der Fluidleitung reguliert, umfasst.

14. Hydraulisches Getriebe, das eine hydraulische Pumpe, einen hydraulischen Motor, eine Hochdruckfluidleitung, die sich von einer Ausgangsseite der hydraulischen Pumpe zu einer Eingangsseite des hydraulischen Motors erstreckt, und eine Niederdruckfluidleitung, die sich von einer Ausgangsseite des hydraulischen Motors zu einer Eingangsseite der hydraulischen Pumpe erstreckt, umfasst, wobei die hydraulische Pumpe und/oder der hydraulische Motor hydraulische Maschinen nach Anspruch 13 sind, wobei das hydraulische Getriebe eine Steuereinheit umfasst, die die hydraulische Pumpe und den hydraulischen Motor steuert und den Druck in der Hochdruckfluidleitung reguliert, wodurch ein maximales Betriebsfluiddruckdifferenzial zwischen der Hochdruckfluidleitung und der Niederdruckfluidleitung definiert wird, wobei das Verhältnis der Querschnittsfläche der inneren Dichtungsrille senkrecht zu der Achse des ringförmigen Ventilsitzes zu der Querschnittsfläche der äußeren Dichtungsrille senkrecht zu der Achse des ringförmigen Ventilsitzes zumindest für den Großteil der axialen Ausdehnung der inneren und der äußeren Dichtungsrille im Wesentlichen dasselbe wie das Verhältnis der durch den ringförmigen Ventilsitz auf die innere Dichtungsrille ausgeübte Kraft zu der durch den ringförmigen Ventilsitz auf die äußere Dichtungsrille ausgeübte Kraft ist, wenn das ringförmige Ventil unter vorgegebenen Betriebsbedingungen geschlossen ist.

**15.** Verfahren zum Betreiben eines ringförmigen Ventils, das die Schritte umfasst, eine Fluidarbeitsmaschine mit einer Arbeitskammer eines zyklisch variierenden Volumens, eine Niederdruckfluidleitung, eine Hochdruckfluidleitung und ein ringförmiges Ventil nach einem der Ansprüche 1 bis 3, das sich zwischen der Arbeitskammer und entweder der Niederdruckfluidleitung oder der Hochdruckfluidleitung befindet, um dadurch den Fluiddurchfluss zwischen der Arbeitskammer und entweder der Niederdruckfluidleitung oder der Hochdruckfluidleitung zu regulieren, bereitzustellen und die Fluidarbeitsmaschine mit einer vorgegebenen Frequenz von Zyklen des Arbeitskammervolumens und vorgegebenen Nieder- und Hochdruckfluidleitungsdrücken zu betreiben, wobei sich die axialen Ausdehnungen der inneren und der äußeren Dichtungsrille um im Wesentlichen denselben Betrag verformen.

## Revendications

**1.** Soupape annulaire (1) comprenant un organe de soupape annulaire (4) et des sièges de soupape interne et externe (12, 14), l'organe de soupape annulaire ayant une surface (6) tournée vers les sièges, qui est tournée vers les sièges de soupape annulaire, soit la surface tournée vers les sièges de l'organe de soupape annulaire soit le siège de soupape interne comprenant un bord d'étanchéité interne annulaire (8), soit la surface tournée vers les sièges de l'organe de soupape annulaire soit le siège de soupape externe comprenant un bord d'étanchéité externe annulaire (10), le bord d'étanchéité interne étant plus résistant à la déformation plastique que le bord d'étanchéité externe, **caractérisée en ce que** le bord d'étanchéité interne est formé, au moins en partie, d'un matériau plus dur que le matériau ou les matériaux constituant le bord d'étanchéité externe.

**2.** Soupape annulaire (1) comprenant un organe de soupape annulaire (4) et des sièges de soupape interne et externe (12, 14), l'organe de soupape annulaire ayant une surface (6) tournée vers les sièges qui est tournée vers les sièges de soupape annulaire, soit la surface tournée vers les sièges de l'organe de soupape annulaire soit le siège de soupape interne comprenant un bord d'étanchéité interne annulaire (8), soit la surface tournée vers les sièges de l'organe de soupape annulaire soit le siège de soupape externe comprenant un bord d'étanchéité externe annulaire (10), le bord d'étanchéité interne étant plus résistant à la déformation plastique que le bord d'étanchéité externe, **caractérisée en ce que** le bord d'étanchéité interne est formé, au moins en partie, d'un matériau ayant une limite d'élasticité supérieure à celle du matériau ou des matériaux constituant le bord d'étanchéité externe.

**3.** Soupape annulaire (1) comprenant un organe de soupape annulaire (4) et des sièges de soupape interne et externe (12, 14), l'organe de soupape annulaire ayant une surface (6) tournée vers les sièges qui est tournée vers les sièges de soupape annulaire, soit la surface tournée vers les sièges de l'organe de soupape annulaire soit le siège de soupape interne comprenant un bord d'étanchéité interne annulaire (8), soit la surface tournée vers les sièges de l'organe de soupape annulaire soit le siège de soupape externe comprenant un bord d'étanchéité externe annulaire (10), le bord d'étanchéité interne étant plus résistant à la déformation plastique que le bord d'étanchéité externe, **caractérisée en ce que** le bord d'étanchéité interne est plus épais que le bord d'étanchéité externe.

**4.** Soupape annulaire selon la revendication 3, dans laquelle la surface en section transversale du bord d'étanchéité interne, perpendiculairement à l'axe de l'organe de soupape annulaire, est supérieure à la surface en section transversale du bord d'étanchéité externe, perpendiculairement à l'axe de l'organe de soupape annulaire, dans une position axiale équivalente à l'intérieur des bords.

**5.** Soupape annulaire selon la revendication 2, dans laquelle, pour au moins la majorité de l'étendue axiale des bords d'étanchéité interne et externe, le rapport de la surface en section transversale du bord d'étanchéité interne perpendiculairement à l'axe de l'organe de soupape annulaire (Ai) à la surface en section transversale du bord d'étanchéité externe perpendiculairement à l'axe de l'organe de soupape annulaire (Ao) est dans la plage :

$$\frac{Fi}{Fo} - 0,6(\frac{Fi}{Fo} - 1) \quad \text{à} \quad \frac{Fi}{Fo} + 0,6(\frac{Fi}{Fo} - 1)$$

où Fi est la force exercée sur le bord d'étanchéité interne par le siège de soupape interne (ou l'organe de soupape interne si le bord d'étanchéité interne est formé sur le siège de soupape interne) et Fo est la force exercée sur le bord d'étanchéité externe par le siège de soupape externe (ou l'organe de soupape externe si le bord d'étanchéité externe est formé sur le siège de soupape externe).

6. Soupape annulaire selon la revendication 5, dans laquelle, pour au moins la majorité de l'étendue axiale des bords d'étanchéité interne et externe, Ai/Ao est substantiellement le même que, ou supérieur à, Fi/Fo.

7. Soupape annulaire selon la revendication 2, dans laquelle les bords d'étanchéité interne et externe s'effilent à mesure qu'ils s'étendent axialement depuis la surface tournée vers les sièges, l'organe de soupape annulaire ayant un axe et les bords d'étanchéité interne et externe s'effilant en suivant des angles theta$_i$ et theta$_o$ par rapport à l'axe, où $ri$.tan theta $i$
$ro$.tan theta $o$
étant dans la plage

$$\frac{Fi}{Fo} - 0,6(\frac{Fi}{Fo} - 1) \quad \text{à} \quad \frac{Fi}{Fo} + 0,6(\frac{Fi}{Fo} - 1)$$

où ri est le rayon moyen du bord d'étanchéité interne et ro est le rayon moyen du bord d'étanchéité externe.

8. Soupape annulaire selon la revendication 2, dans laquelle

$$\frac{ri.\tan thetai}{ro.\tan thetao} > \frac{Fi}{Fo}$$

9. Soupape annulaire selon l'une quelconque des revendications 1 à 3, dans laquelle les bords d'étanchéité interne et/ou externe ont chacun un profil triangulaire, un profil ogival ou un profil en forme de doucine.

10. Soupape annulaire selon la revendication 9, dans laquelle l'épaisseur des bords d'étanchéité interne et externe est proportionnelle sur toute l'étendue axiale des bords d'étanchéité interne et externe.

11. Soupape annulaire selon l'une quelconque des revendications 1 à 3, dans laquelle les pointes des bords d'étanchéité interne et externe sont dans le même plan.

12. Soupape annulaire selon l'une quelconque des revendications 1 à 3, dans laquelle l'élasticité des bords d'étanchéité interne et externe est sélectionnée de telle sorte que les pointes des bords d'étanchéité interne et externe se déforment élastiquement sensiblement dans la même mesure pendant le fonctionnement.

13. Machine hydraulique comprenant au moins une chambre de travail de volume cycliquement variable, une conduite de fluide et une soupape annulaire selon l'une quelconque des revendications 1 à 3, régulant l'écoulement de fluide entre la chambre de travail et la conduite de fluide.

14. Transmission hydraulique comprenant une pompe hydraulique, un moteur hydraulique, une conduite de fluide haute pression s'étendant depuis un côté de sortie de la pompe hydraulique jusqu'à un côté d'entrée du moteur hydraulique et une conduite de fluide basse pression s'étendant depuis un côté de sortie du moteur hydraulique jusqu'à un côté d'entrée de la pompe hydraulique, la pompe hydraulique et/ou le moteur hydraulique étant une machine hydraulique

EP 2 646 718 B1

selon la revendication 13, la transmission hydraulique comprenant un dispositif de commande qui commande la pompe hydraulique et le moteur hydraulique et qui régule la pression dans la conduite de fluide haute pression pour ainsi définir une différence de pression de fluide de fonctionnement maximale entre la conduite de fluide haute pression et la conduite de fluide basse pression, où, pour au moins la majorité de l'étendue axiale des bords d'étanchéité interne et externe, le rapport de la surface en section transversale du bord d'étanchéité interne perpendiculairement à l'axe du siège de soupape annulaire à la surface en section transversale du bord d'étanchéité externe perpendiculairement à l'axe du siège de soupape annulaire est substantiellement le même que le rapport de la force exercée sur le bord d'étanchéité interne par le siège de soupape annulaire à la force exercée sur le bord d'étanchéité externe par le siège de soupape annulaire lorsque la soupape annulaire est fermée dans des conditions de fonctionnement prédéterminées.

15. Procédé de rodage d'une soupape annulaire, comprenant les étapes consistant à fournir une machine de travail fluidique ayant une chambre de travail de volume cycliquement variable, une conduite de fluide basse pression, une conduite de fluide haute pression, et une soupape annulaire selon l'une quelconque des revendications 1 à 3, située entre la chambre de travail et soit la conduite de fluide basse pression soit la conduite de fluide haute pression, pour ainsi réguler l'écoulement de fluide entre la chambre de travail et soit la conduite de fluide basse pression soit la conduite de fluide haute pression, et à faire fonctionner la machine de travail fluidique avec une fréquence prédéterminée de cycles de volume de la chambre de travail et de pressions prédéterminées de la conduite de fluide basse pression et de la conduite de fluide haute pression, l'étendue axiale de la quantité de déformation des bords d'étanchéité interne et externe étant substantiellement la même.

[Fig. 1]

[Fig. 2]

[Fig. 3]

[Fig. 4]

[Fig. 5]

[Fig. 6]

[Fig. 7A]

[Fig. 7B]

[Fig. 7C]

[Fig. 7D]

[Fig. 8]

[Fig. 9]

[Fig. 10]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006006883 A1
- AT 509878 A4
- DE 10353011 A1
- DE 10360253 A1
- EP 0361927 A
- EP 0494236 A

**Non-patent literature cited in the description**

- **YOUNG, W. C. ; ROARK, R. J. ; BUDYNAS, R. G.** Roark's Formulas for Stress and Strain. McGraw-Hill, 2002